**Europäisches Patentamt**

**European Patent Office**

**Office européen des brevets**

(19)

(11) Veröffentlichungsnummer: **0 259 795 B1**

(12) **EUROPÄISCHE PATENTSCHRIFT**

(45) Veröffentlichungstag der Patentschrift: **27.11.91**

(51) Int. Cl.5: **B60N 3/04**

(21) Anmeldenummer: **87112949.0**

(22) Anmeldetag: **04.09.87**

(54) Matte, insbesondere Fussmatte für Kraftfahrzeuge, aus Textilgewebe.

(30) Priorität: **09.09.86 DE 3630644**

(43) Veröffentlichungstag der Anmeldung:
**16.03.88 Patentblatt 88/11**

(45) Bekanntmachung des Hinweises auf die
Patenterteilung:
**27.11.91 Patentblatt 91/48**

(84) Benannte Vertragsstaaten:
**BE CH DE FR LI NL**

(56) Entgegenhaltungen:
**DE-A- 1 925 265**
**DE-U- 8 337 112**

(73) Patentinhaber: **Hüther, Friedrich**
**Mosbacher Strasse 31**
**W-6955 Aglasterhausen(DE)**

(72) Erfinder: **Hüther, Friedrich**
**Mosbacher Strasse 31**
**W-6955 Aglasterhausen(DE)**

(74) Vertreter: **Hach, Hans Karl, Dr.**
**Tarunstrasse 23**
**W-6950 Mosbach-Waldstadt(DE)**

Rank Xerox (UK) Business Services

**Beschreibung**

Die Erfindung betrifft eine Matte aus Fasermaterial, inbesondere Fußmatte für Kraftfahrzeuge, die mit einer Schicht aus elastischem Material hinterlegt ist, aus deren Unterseite Vorsprünge herausragen, die über Flächenareale verteilt sind.

Bei einer aus DE-U-8337112.5 bekannten Matte, die dem Oberbegriff des Anspruchs 1 entspricht, besteht der Mattenkörper aus ineinander schlingenförmig verschlungenen Kunststoffasern, auf dessen Unterseite ein weichelastisches Material aufgetragen ist, in dem Materialerhöhungen in Form von wellenförmig und parallel zueinander verlaufenden Wülsten ausgebildet sind. Diese Wülste dienen als Vorsprünge.

Aus DE-A-1925265 ist eine Fußmatte für Kraftfahrzeuge bekannt, die aus einer aus Kunststoff geformten Bodenmatte besteht, an deren Oberseite nadelartige Erhebungen und an deren Unterseite kegelförmige Vorsprünge aus Kunststoff angeformt sind.

Aufgabe der Erfindung ist es, eine Matte der eingangs genannten Art so auszugestalten, daß sie einfach und mit geringem Materialaufwand herstellbar ist und eine solide rutschfeste Auflage findet, auch bei wenig flauschigen Geweben als Unterlage.

Die Erfindung ist dadurch gekennzeichnet, daß diese Schicht feuchtigkeitsdicht ist und aus ausgehärtetem thermoplastischem Kunststoff, vorzugsweise PVC, besteht, daß das Textilgewebe ein genadelter Filz ist, der mit seinen rückseitigen Schlingen in den Kunststoff der Kunststoffschicht eingelassen ist, und daß die Vorsprünge dornartig und kegelartig zum freien Ende spitz auslaufend geformt sind.

Die kegelartigen Vorsprünge können, bedingt durch ihre Form leicht in das unterliegende Veloursgewebe eindringen und sind wegen der Ausbildung aus dem ausgehärteten thermoplastischen Kunststoff, vorzugsweise PVC, auch hinreichend stabil, neigen also nicht so leicht zum Umknicken wie die Vorsprünge nach dem Stand der Technik. Kegelartige Vorsprünge haben im Verhältnis zu ihrer Höhe eine breitere Grundfläche, finden also guten Halt an der Kunststoffschicht, die demzufolge schwächer ausgebildet werden kann als bei langen, mehr zylindrischen Vorsprüngen. Dadurch kann Kunststoffmaterial für die Vorsprünge eingespart werden.

Die kegelartigen Vorsprünge können sehr gedrungen ausgeführt werden und sind dann sehr stabil und erfordern auch wenig Kunststoffmaterial für die Kunststoffschicht. Auch die Herstellung ist sehr einfach, wie im einzelnen weiter unten noch dargelegt wird.

Vorteilhaft beträgt der größte Durchmesser eines Vorsprungs 1 bis 3 mm, vorzugsweise 1,8 bis 2,2 mm. Vorteilhaft beträgt die Länge eines Vorsprungs das 1 bis 3fache des größten Durchmessers, vorzugsweise das 1,5 bis 2,5fache des größten Durchmessers.

Die Matte ist als Fußmatte in Kraftfahrzeugen geeignet, sie ist aber auch für andere Zwecke geeignet, bei denen es darauf ankommt, eine Matte rutschfest auf einer Textilunterlage abzulegen. Zum Beispiel kann die Matte ein Auflageteppich sein, der als Brücke auf einen mit Teppichboden ausgelegten Zimmerfußboden gelegt werden soll.

Das Textilgewebe ist zweckmäßig ein genadelter Filz, weil dieser am einfachsten herstellbar ist. Dieser genadelte Filz kann auf ein Maschengewebe genadelt sein. Das Maschengewebe ist aber in vielen Fällen entbehrlich, weil die Kunststoffschicht genügend Halt bieten kann, so daß vorzugsweise das Textilgewebe nur aus genadelten Filzfasern besteht. Dabei werden Kunstfasergewebe bevorzugt.

Es empfiehlt sich, eine Matte an ihrem ganzen Umfang zu umsäumen. Eine entsprechende Ausgestaltung ist dadurch gekennzeichnet, daß über den Rand ein Umsäumer aus Textilstoff genäht ist, der den äußeren Randbereich des Textilgewebes und der Kunststoffschicht abdeckt, und daß der vom Umsäumer abgedeckte Bereich der Kunststoffschicht frei ist von kegelartigen, spitz auslaufenden Vorsprüngen.

Man kann die vom Umsäumer abgedeckten Bereiche von vornherein beim Anbringen der Vorsprünge aussparen. Das ist aber unter Umständen für die Massenfabrikation zu umständlich, weil, insbesondere bei Matten für Kraftfahrzeuge, sehr viele verschiedene Formen in Betracht kommen, die man zweckmäßig aus vorgefertiger Meterware herausschneidet. Wenn sich dann Vorsprünge im Bereich der vom Umsäumer abgedeckten Bereiche befinden, kann man diese entweder abschneiden oder besser noch durch Heißverformen niederdrükken, so daß sie den Umsäumer nicht mehr stören.

Eine Matte nach der Erfindung ist sehr einfach herstellbar derart, daß das fertig genadelte Textilgewebe zunächst rückseitig mit fließfähigem Kunststoff beschichtet wird, der dann zur Kunststoffschicht mindestens angehärtet wird, daß dann mit fließfähigem Kunststoff die Vorsprünge auf die Kunststoffschicht gesetzt werden, indem für jeden Vorsprung eine abgemessene Kunststoffportion aufgesetzt wird, die dann, während der Kunststoff noch fließfähig ist, kegelartig spitz auslaufend ausgezogen wird, und daß dann der Kunststoff, vorzugsweise durch Bestrahlen mit Infrarotlicht, ausgehärtet wird.

Dabei wird vorzugsweise die Kunststoffschicht auf das Textilgewebe aufgewalzt und vorzugsweise werden die Kunststoffportionen für die Vorsprünge aus den einzelnen Vorsprüngen zugeordneten Löchern im Walzenumfang einer Auftragswalze der Kunststoffschicht zugeführt und durch den im Zuge der Umlaufbewegung der Walze wieder abhebenden Walzenumfangsabschnitt ausgezogen.

Die Erfindung wird nun anhand der beigefügten Zeichnung näher erläutert.

In der Zeichnung zeigt:

Figur 1     eine Fußmatte für ein Kraftfahrzeug von unten gesehen,

Figur 2     den Schnitt II aus Figur 1,

Figur 3     den Ausschnitt III aus Figur 2 vergrößert, und

Figur 4     den Ausschnitt IV aus Figur 1 vergrößert.

In der Zeichnung ist mit 1 eine Matte bezeichnet, die aus einem sich über die Matte mit gleicher Stärke erstreckendem Textilgewebe 2 besteht, das mit einer Kunststoffschicht 3 hinterlegt ist. Die Kunststoffschicht 3 besteht aus ausgehärtetem thermoplastischen Kunststoff, vorzugsweise PVC. Das Textilgewebe 2 besteht nur aus genadelten Filzfasern, weist also kein Maschengewebe zur Verstärkung auf. Bei den Fasern handelt es sich vorzugsweise um Kunststoff-Fasern, es können aber auch Naturfasern oder Mischgewebe aus Kunststoff- und Naturfasern eingesetzt werden.

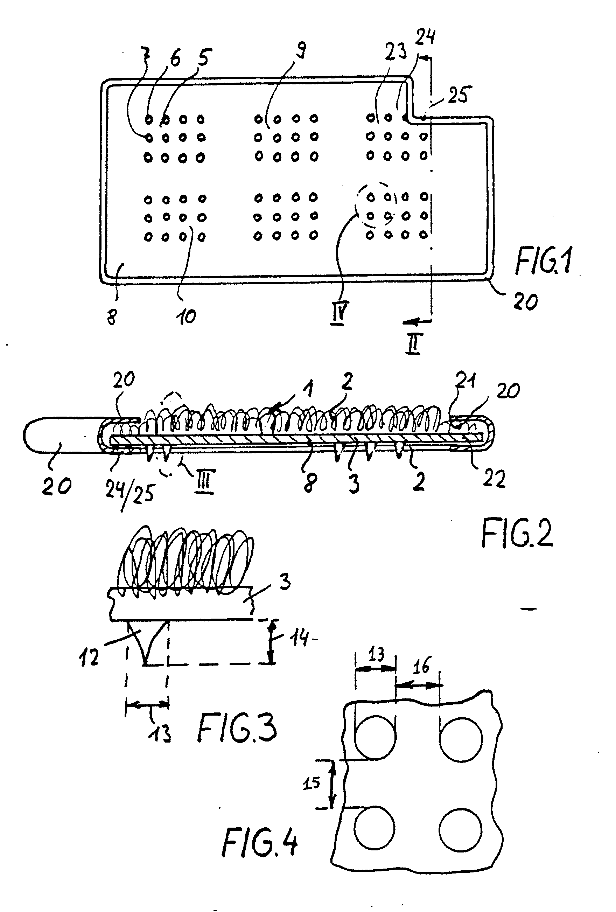

Die rückseitigen Schlingen des Textilgewebes sind zum Teil in den Kunststoff der Kunststoffschicht 3 eingelassen, wie besonders gut aus Figur 3 ersichtlich.

Über Flächenareale, zum Beispiel das Flächenareal 5, der Kunststoffschicht 3 sind Vorsprünge 6, 7 ... angeordnet, die aus der dem Beschauer von Figur 1 zugekehrten Unterseite beziehungsweise Rückseite 8 der Kunststoffschicht 3 herausragen. Statt nur einzelne Flächenareale 5, 9, 10 ... mit Vorsprüngen zu besetzen, kann auch die ganze Fläche der Kunststoffschicht 3 gegebenenfalls unter Aussparung der Randbereiche mit Vorsprüngen besetzt sein.

Die Vorsprünge 6, 7 ... sind alle gleichartig geformt, und zwar kegelartig zum freien Ende spitz auslaufend. Ein solcher Vorsprung, wie zum Beispiel der Vorsprung 12 aus Figur 3, hat eine kreisrunde Grundfläche, deren Durchmesser gemäß Doppelpfeil 13 2 mm beträgt. Die Höhe gemäß Doppelpfeil 14 beträgt 2,2 mm. Die Form kann von der geometrischen Idealform eines Kreiskegels abweichen durch Deformierungen, Einschnürungen oder Auswölbungen. Die grobe Grundform des Vorsprungs ist aber die eines Kreiskegels.

Vorzugsweise sind die Vorsprünge gleichmäßig über die betreffenden Flächenareale verteilt, sie können aber auch ungleichmäßig verteilt sein. Nach Figur 1 bis 4 sind die Vorsprünge im orthogonalen Raster angeordnet. Der Zeilenabstand gemäß Doppelpfeil 15 beträgt 10 mm und der Spaltenabstand gemäß Doppelpfeil 16 beträgt ebenfalls 10 mm. Die Abstände gemäß Doppelpfeil 15 und 16 sind wesentlich größer als die Abmessungen gemäß Doppelpfeil 13 und 14.

Der Kunststoff der Kunststoffschicht 3 ist zweckmäßig der gleiche Kunststoff, aus dem auch die Vorsprünge bestehen.

Die Matte 1 ist auf ihrem ganzen Umfang umsäumt mit einem Gewebestreifen 20, der den äußeren Randbereich 21 des Textilgewebes 2 und den Randbereich 22 der Kunststoffschicht 3 abdeckt. Die Matte 1 ist in der in Figur 1 dargestellten Form aus Meterware herausgestanzt und dabei ist das Flächenareal 23 angeschnitten worden, so daß einige Vorsprünge im Randbereich 22 liegen. Man kann über diese Vorsprünge den Gewebestreifen 20 herumnähen und die Vorsprünge dabei etwas niederdrücken. Besser ist es aber, diese Vorsprünge abzuschneiden oder noch einfacher, sie unter leichtem Erwärmen niederzudrücken, so daß nur noch ein nicht störender kleiner Buckel 24 für den ursprünglichen Vorsprung stehenbleibt. Entsprechendes gilt auch für den Buckel 25.

In Figur 2 ist der Übersicht halber der als Umsäumer dienende Gewebestreifen ganz locker gezeichnet. Tatsächlich ist er stramm mit dem Randbereich vernäht, so daß unter dem Gewebestreifen 20 die Randbereiche des Textilgewebes 2 zusammengepreßt sind.

## Patentansprüche

1.  Matte aus Fasermaterial, insbesondere Fußmatte für Kraftfahrzeuge, die mit einer Schicht ( 3 ) aus elastischem Material hinterlegt ist, aus deren Unterseite Vorsprünge ( 6, 7, 12 ) herausragen, die über Flächenareale ( 5, 9, 10, 23 ) verteilt sind,

    wobei Textilgewebe ( 2 ) mit Schlingen als Fasermaterial vorgesehen ist, das mit der Schicht ( 3 ) hinterlegt ist, dadurch gekennzeichnet,

    daß diese Schicht ( 3 ) feuchtigkeitsdicht ist und aus ausgehärtetem thermoplastischem Kunststoff, vorzugsweise PVC, besteht,

    daß das Textilgewebe ( 2 ) ein genadelter Filz ist, der mit seinen rückseitigen Schlingen in den Kunststoff der Kunststoffschicht ( 3 ) eingelassen ist, und

    daß die Vorsprünge ( 6, 7, 12 ) dornartig und kegelartig zum freien Ende spitz auslaufend geformt sind.

2.  Matte nach Anspruch 1, dadurch gekennzeichnet,

    daß der größte Durchmesser eines Vorsprungs ( 12 ) 1 bis 3 mm (Millimeter), vorzugsweise 1,8 bis 2,2 mm, beträgt, und

    daß die Länge eines Vorsprungs das 1 bis 3fache des größten Durchmessers, vorzugsweise das 1,5 bis 2,5fache des größten Durchmessers, beträgt.

3. Matte nach Anspruch 1 und 2, dadurch gekennzeichnet,

daß das Textilgewebe ( 2 ) ausschließlich aus genadelten Filzfasern besteht.

4. Matte nach einem der vorhergehenden Ansprüche, dadurch gekennzeichnet,

daß die Vorsprünge ( 6, 7, 12 ) aus dem gleichen Kunststoff wie die Kunststoffschicht ( 3 ) bestehen.

5. Matte nach einem der vorhergehenden Ansprüche, dadurch gekennzeichnet,

daß über den Rand ein Umsäumer ( 20 ) aus Textilstoff genäht ist, der den äußeren Randbereich des Textilgewebes ( 2 ) und der Kunststoffschicht ( 3 ) abdeckt, und

daß der vom Umsäumer ( 20 ) abgedeckte Bereich der Kunststoffschicht ( 3 ) frei ist von kegelartigen, spitz auslaufenden Vorsprüngen ( 6, 7, 12 ).

6. Verfahren zur Herstellung einer Matte nach einem der vorhergehenden Ansprüche, dadurch gekennzeichnet,

daß das fertig genadelte Textilgewebe ( 2 ) zunächst rückseitig mit fließfähigem Kunststoff beschichtet wird, der dann zur Kunststoffschicht ( 3 ) mindestens angehärtet wird,

daß dann mit fließfähigem Kunststoff die Vorsprünge ( 6, 7, 12 ) auf die Kunststoffschicht ( 3 ) gesetzt werden, indem für jeden Vorsprung eine abgemessene Kunststoffportion aufgesetzt wird, die dann, während der Kunststoff noch fließfähig ist, kegelartig spitz auslaufend ausgezogen wird, und

daß dann der Kunststoff, vorzugsweise durch Bestrahlen mit Infrarotlicht, ausgehärtet wird.

7. Verfahren nach Anspruch 6, dadurch gekennzeichnet,

daß die Kunststoffschicht ( 3 ) auf das Textilgewebe ( 2 ) aufgewalzt wird.

8. Verfahren nach Anspruch 6 oder 7, dadurch gekennzeichnet,

daß die Kunststoffportionen für die Vorsprünge ( 6, 7, 12 ) aus den einzelnen Vorsprüngen zugeordneten Löchern im Walzenumfang einer Auftragswalze der Kunststoffschicht zugeführt werden und durch den im Zuge der Umlaufbewegung der Walze wieder abhebenden Walzenumfangsabschnitt ausgezogen werden.

## Claims

1. Mat made from fibrous material and in particular a floor mat for motor vehicles, which is underlaid with a layer (3) of elastic material and from whose underside project projections (6, 7, 12), which are distributed over the surface areas (5, 9, 10, 23), in which the textile fabric (2) with loops constitutes the fibrous material and is underlaid with the layer (3), characterized in that said layer (3) is moistureproof and made from cured thermoplastic material, preferably PVC, that the textile fabric (2) is a needled felt, which is inserted with its back loops in the plastic of the plastic layer (3) and that the projections (6, 7, 12) taper in spiked, conical manner towards the free end.

2. Mat according to claim 1, characterized in that the greatest diameter of a projection (12) is 1 to 3 mm (millimetres), preferably 1.8 to 2.2 mm and that the length of a projection is 1 to 3 times the greatest diameter and preferably 1.5 to 2.5 times the greatest diameter.

3. Mat according to claims 1 and 2, characterized in that the textile fabric (2) exclusively comprises needled felt fibres.

4. Mat according to one of the preceding claims, characterized in that the projections (6, 7, 12) are made from the same plastic as the plastic layer (3).

5. Mat according to one of the preceding claims, characterized in that over the border is sewn a textile material seamer (20), which covers the outer border region of the textile fabric (2) and the plastic layer (3) and that the area of the plastic layer (3) covered by the seamer (20) is free from conical, tapering projections (6, 7, 12).

6. Process for producing a mat according to one of the preceding claims, characterized in that the finished needled textile fabric (2) is initially coated on the back with flowable plastic, which is then at least precured to the plastic layer (3), that then with flowable plastic the projections (6, 7, 12) are placed on the plastic layer (3), in that for each projection a measured off plastic portion is engaged and then, whilst the plastic is still flowable, is drawn out in conically tapering manner and that then the plastic is cured, preferably by irradiating with infrared light.

7. Process according to claim 6, characterized in that the plastic layer (3) is rolled onto the textile fabric (2).

8. Process according to claims 6 or 7, characterized in that the plastic portions for the projections (6, 7, 12) are supplied to the plastic layer from holes in the circumference of an applicator roller associated with the individual projections and are drawn out through the roller cirucmference portion raised again during the rotary movement of the roller.

**Revendications**

1. Paillasson en matériau fibreux, notamment tapis de sol pour véhicules automobiles, dont le dessous est recouvert d'une couche (3) de matériau élastique, du côté inférieur de laquelle dépassent des saillies (6, 7, 12) réparties sur des aires de surface (5, 9, 10, 23) et dans lequel un tissu textile (2) à bouclettes est prévu en tant que matériau fibreux dont le dessous est recouvert de la couche (3), caractérisé en ce

que cette couche (3) est étanche à l'humidité et est constituée d'une matière thermoplastique cuite, de préférence de chlorure de polyvinyle,

que le tissu textile (2) est un feutre aiguilleté dont les bouclettes sur le côté arrière sont encastrées dans la matière plastique de la couche de matière plastique (3) et

que les saillies (6, 7, 12) sont conformées à la façon d'épines et de cônes se terminant en pointe à l'extrémité libre.

2. Paillasson selon la revendication 1, caractérisé en ce

que le plus grand diamètre d'une saillie (12) est de 1 à 3 mm (millimètres), de préférence de 1,8 à 2,2 mm, et

que la longueur d'une saillie correspond à 1 à 3 fois le plus grand diamètre, de préférence à 1,5 à 2,5 fois le plus grand diamètre.

3. Paillasson selon les revendications 1 et 2, caractérisé en ce que le tissu textile (2) est formé exclusivement de fibres de feutre aiguilletées.

4. Paillasson selon une des revendications précédentes, caractérisé en ce que les saillies (6, 7, 12) sont faites de la même matière plastique que la couche (3) de matière plastique.

5. Paillasson selon une des revendications précédentes, caractérisé en ce

qu'une bordure (20) en matière textile est cousue autour du bord, de manière à recouvrir la zone marginale extérieure du tissu textile (2) et de la couche (3) de matière plastique et

que la zone de la couche (3) de matière plastique recouverte par la bordure (20) est exempte de saillies (6, 7, 12) semblables à des cônes et se terminant en pointe.

6. Procédé pour fabriquer un paillasson selon une des revendications précédentes, caractérisé en ce

que l'on enduit d'abord de matière plastique fluide le dos du tissu textile (2) dont l'aiguilletage est terminé, puis on produit au moins un début de cuisson de la couche (3) de matière plastique,

que l'on pose ensuite les saillies (6, 7, 12) au moyen de matière plastique fluide sur la couche (3) de matière plastique, en déposant sur cette couche une portion dosée de matière plastique, que l'on étire ensuite en cône pointu pendant que la matière plastique est encore fluide et

que l'on produit après cela la cuisson de la matière plastique, de préférence par irradiation à la lumière infrarouge.

7. Procédé selon la revendication 6, caractérisé en ce que l'on applique la couche (3) de matière plastique par laminage sur le tissu textile (2).

8. Procédé selon la revendication 6 ou 7, caractérisé en ce que l'on amène les portions de matière plastique pour les saillies (6, 7, 12) à la couche de matière plastique à travers des orifices coordonnés aux différentes saillies et ménagés dans la surface périphérique d'un cylindre d'application, l'étirage des portions de matière plastique étant produit par l'écartement consécutif des segments de surface périphérique correspondants du cylindre au cours du mouvement de rotation de ce cylindre.

*FIG.1*

*FIG.2*

*FIG.3*

*FIG.4*